# EUROPÄISCHE PATENTANMELDUNG

(11) **EP 0 810 365 A1**
(43) Veröffentlichungstag der Anmeldung: **03.12.1997**
(21) Anmeldenummer: 96107493.7
(22) Anmeldetag: 10.05.1996
(51) Int. Cl.: F02F 3/26

(54) **Dieselmotor mit Direkteinspritzung und Verbrennungsmulde im Kolben**

(71) Anmelder: STEYR-DAIMLER-PUCH AKTIENGESELLSCHAFT, 1010 Wien (AT)
(72) Erfinder: Kordesch, Valentin, Dr., 9133 Miklauzhof (AT); Hack, Walter, Ing., 4452 Ternberg (AT)

(57) **Zusammenfassung**

Ein Dieselmotor mit Direkteinspritzung hat Kolben (1) mit jeweils einer Verbrennungsmulde (3), wobei die Verbrennungsmulde (3) von einer vom Kolbenboden (2) ausgehenden Einschnürung (7), einem äußeren Wandteil (9) und einem mittigen, eine Erhebung (12) bildenden, im inneren Wandteil (10) gebildet ist. Um in der Mulde optimale Strömungsverhältnisse zu erhalten, weist der Übergang (21) von der Einschnürung (7) zum äußeren Wandteil (9) eine starke Ausrundung (22) auf, ist der innere Wandteil (10) konkav bis zu einer Abreißkante (30), die ungefähr in halber Tiefe (13) der Verbrennungsmulde (3) liegt und es nimmt der kürzeste Abstand (33) zwischen äußerem (9) und innerem Wandteil (10) von der Abreißkante (30) bis zum tiefsten Punkt (8) stetig ab.

## Beschreibung

Die Erfindung handelt von einem Dieselmotor mit Direkteinspritzung mit mindestens einem Kolben mit jeweils einer drehsymmetrischen Verbrennungsmulde, der die Verbrennungsluft mit Drall zugeführt wird, wobei die Verbrennungsmulde im Radialschnitt von einer vom Kolbenboden ausgehenden Einschnürung, von einem daran anschließenden sich nach unten zu radial erweiternden und wieder verengenden äußeren Wandteil und einem mittigen, eine Erhebung bildenden, im wesentlichen konkaven inneren Wandteil gebildet ist.

Im Motorenbau für Kraftfahrzeuge wird heute mehr denn je nach höchster Treibstoffökonomie und geringsten Emissionen gestrebt. Ersteres erfordert eine möglichst vollständige Verbrennung, die Minimierung der verschiedenen Emissionen (NOX, HC, CO und Partikel) erfordert teils dazu im Widerspruch stehende Maßnahmen. Die immer strenger werdenden gesetzlichen Auflagen (EURO II ab 1996, EURO III ab 2000, entsprechend den Richtlinien 70/220 und 88/77/EWG mit späteren Novellen) erzwingen ständige Weiterentwicklung.

Diese erfordert aufwendige Versuche, profundes Verstehen der Strömungs- und Verbrennungsvorgänge und feine Anpassungen. Wesentliche Verbesserungen unterscheiden sich konstruktiv oft nur wenig vom Stand der Technik, haben aber starken Einfluß auf die sehr komplexen Strömungs- und Verbrennungsverhältnisse.

Bei Dieselmotoren mit Direkteinspritzung hat sich die Ausbildung einer drehsymmetrischen Verbrennungsmulde im Kolben, der die Verbrennungsluft mit Drall zugeführt wird, und bei der eine Einspritzdüse mit radial-abwärts austretenden Strahlen ungefähr mittig über der Verbrennungsmulde angeordnet ist, als zielführend erwiesen. Die Erfindung hat die Weiterentwicklung einer solchen zum Gegenstand.

Aus der EP 271 478 B1 ist eine derartige Verbrennungsmulde bekannt, in der als mittige Erhebung ein pilzförmiger Körper vorgesehen ist, der gemeinsam mit einer Kante am Übergang von der zylindrischen Einschnürung zum sich nach unten erweiternden äußeren Wandteil eine weitere Einschnürung bildet, die die Verbrennungsmulde zweiteilt. Der untere Teil der Mulde hat die Form eines Torus, in dem eine Strömung mit zwei überlagerten Drehungen herrscht. Die erste ist eine Umfangsströmung mit der Symmetrieachse der Mulde als Drehachse, die zweite eine Drehung um eine Achse, die in der Richtung der Umfangsströmung liegt. Durch die weitere Einschnürung hindurch wird dem unteren Teil der Verbrennungsmulde Luft zugeführt und Brenngas entnommen. Dadurch wird im unteren Teil der Mulde eine intensive Luftbewegung erreicht, die zur Verteilung des eingespritzten Treibstoffes führt und auch bei der Aufnahme des wandverteilten Teiles der auf die weitere Einschnürung gerichteten Treibstoffstrahlen, hilft. Beim Durchströmen der weiteren Einschnürung in beiden Richtungen entstehen jedoch Drosselverluste. Da die Luft nur unter Drosselverlusten in den unteren Teil der Mulde eintreten und aus dieser wieder austreten kann, ist der Luftdurchsatz relativ gering, wodurch die Aufnahmefähigkeit der Luft für den eingespritzten Treibstoff und die Rauchgrenze relativ bald erreicht wird. Da weiters nach dem Zünden des Gemisches die heissen Gase die Wand des unteren Teiles der Mulde sehr oft und heftig berühren und obendrein den unteren Raum nur schwer verlassen können, ist deren Verweilzeit im torischen Teil der Mulde lange und über die Wände der Mulde wird folglich an den Kolben sehr viel Wärme abgegeben. Das führt nicht nur zu thermischer Überlastung des Kolbens, sondern auch zu Wirkungsgradeinbußen durch Wärmeverlust. Der Raum über dem Pilz ist, auch wegen der Pilzform, praktisch überhaupt nicht genutzt. Er ist ein Totraum, der nur sehr unvollkommen in die Verbrennung einbezogen ist.

Eine andere derartige Verbrennungsmulde ist aus der EP 363 190 A2 bekannt. Auch hier geht die zylindrische Einschnürung am Kolbenboden scharfkantig, sogar extrem scharfkantig, in den äußeren Wandteil über. Dadurch bildet sich stromabwärts dieser Kante - dort wo Teile der Brennstoffstrahlen auftreffen - eine Totzone, in der keine Aufbereitung stattfindet. Dadurch und durch den weit nach außen ausladenden äußeren Wandteil ist auch die Ausbildung einer Rotation um die in Umfangsrichtung liegende Achse stark behindert, da bei konstantem Drall die Strömungsgeschwindigkeit mit steigendem Radius ja stark abnimmt. Über dem die mittige Erhebung bildenden konkav-konvexen Wandteil bildet sich auch eine Totzone. Ein sich an dem äußeren Wandteil bildender Film wird von der Luftströmung bis auf den Gipfel der Erhebung mitgenommen, wo er sich mangels Strömungsgeschwindigkeit der Luft sammelt. Dadurch treten in gewissen Betriebszuständen verstärkt CH-Emissionen auf. Wenn auch die Wandteile keine Einschnürung bilden, so haben die durch Strömungsablösung und großräumige Wirbelbildung entstehenden Totzonen auf beiden Seiten die oben beschriebene Wirkung einer Einschnürung.

Aus der EP 412 552 A1 ist eine weitere derartige Verbrennungsmulde bekannt. Bei dieser ist insoferne Abhilfe geschaffen, als an der inneren Erhebung eine Kante gebildet ist. Diese Kante entsteht aber nur durch Abschneiden der sonst die Einspritzstrahlen behindernden Teile. Die Strömungsgeschwindigkeit an dieser Kante reicht aber wegen der Proportionen und Anströmungsverhältnisse des torusförmigen Ringarmes für eine Ablösewirkung nicht aus. Der Raum zwischen äußerem und innerem Wandteil ist jedoch, entsprechend dem kleinen Radius des den Torus erzeugenden Kreises, sehr schmal, sodaß sich auch hier keine schöne Drehströmung um die in Umfangsrichtung liegende Achse ausbilden kann, verstärkt noch durch die scharfe Kante am Übergang von der Einschnürung am Kolbenboden zum äußeren Wandteil. Somit ist auch hier der Gasdurchsatz durch den torusförmigen Raum unzureichend, weil zu wenig Luft zugeführt und zuviel Luft an der Kante vorbei abgeführt wird.

Der Erfindung liegt somit die Aufgabe zugrunde, die Mulde so zu formen, daß optimale Strömungsverhältnisse entstehen, um eine weitere Verbesserung von Verbrauch und Emissionen zu erzielen.

Erfindunggemäß wird das mit den kennzeichnenden Merkmalen des 1. Anspruches erreicht. Die starke Ausrundung am Übergang von der Einschnürung am Kolbenboden zum sich nach unten erweiternden äußeren Wandteil bewirkt, daß die mit dem Einlaßdrall zuströmende Verbrennungsluft ohne Turbulenzverluste in den unteren Teil der Verbrennungsmulde gelangt, am äußeren Wandteil entlangströmt und sanft umgelenkt wird. Dadurch bildet sich nebst dem bereits vorhandenen Drall um die vertikale Symmetrieachse der Mulde die überlagerte Drehströmung um die Achse in Richtung der Umfangsströmung besonders schön aus. Sodann strömt die Verbrennungsluft am konkaven inneren Wandteil bis zu einer Abreißkante, die ungefähr in halber Tiefe der Verbrennungsmulde liegt. An dieser löst sich die Strömung, wieder mit nur geringen Turbulenzverlusten, vom inneren Wandteil und setzt zu einem Teil die überlagerte Drehströmung um die Achse in Richtung der Umfangsströmung fort, zum anderen Teil strömt sie aufwärts. Dieser andere Teil vergrößert sich durch die Abwärtsbewegung des Kolbens.

Dadurch, daß weiters im Radialschnitt der kürzeste Abstand zwischen äußerem und innerem Wandteil von der Abreißkante bis zum tiefsten Punkt der Verbrennungsmulde stetig abnimmt, entspricht das Verhältnis der Teilung der Strömung den Anforderungen der Zerstäubung des Treibstoffes und der Verbrennung: Die Verweilzeit im unteren Teil der Mulde ist auf das Optimum verringert, ohne daß die überlagerte Drehströmung behindert ist. Dadurch kann der Mulde viel Frischluft zugeführt werden. So wird sie in der Beginnphase der Einspritzung in ausreichender Menge und mit ausreichender Geschwindigkeit im Bereich der Einspritzstrahlen an der Ausrundung am Übergang vorbeigeführt. Wegen der unbehinderten Strömung am Übergang kommt es auch bei fortgeschrittenem Einspritzen nicht so leicht zur Filmbildung an den Wandteilen. Wenn bei extremen Betriebszuständen doch Filmbildung auftritt, so wird dieser Film bis zur Abreißkante mitgenommen und an ihr zerstäubt, da an ihr wegen ihrer Lage und dem stetig zunehmenden Abstand zwischen äußerem und innerem Wandteil eine ausreichende Gasgeschwindigkeit herrscht. Verstärkt wird diese Wirkung noch dadurch, daß nach einem gewissen Kolbenhub ein großer Teil der Strömung nicht mehr umgelenkt wird, sondern aufwärts strömt. Das heißt, die strömungsteilende Wirkung der Abreißkante ändert sich in Abhängigkeit von der Kolbenstellung im richtigen Sinn.

Insgesamt wird durch das vielfältige Zusammenwirken dieser Merkmale erreicht: ein sehr guter Wirkungsgrad durch sehr geringe Druck- und Wärmeverluste; sehr geringe CH-Emissionen, da minimale bis gar keine Filmbildung; geringe NOX- und Partikelkonzentrationen, da beste Verteilung des Treibstoffes in der gesamten Verbrennungsluft, auch noch während der Abwärtsbewegung des Kolbens. Die entsprechenden Werte sind durchwegs besser als bei Verbrennungsmulden nach dem Stand der Technik.

Dabei wurden die besten Werte erzielt, wenn die Ausrundung am Übergang von der Einschnürung zum äußeren Wandteil einen Rundungsradius von 0,3 bis 0,5 mal dem Radius der Einschnürung aufweist (Anspruch 2). Bei den üblichen Einlaßdrallzahlen kann sich die Strömung bei Wahl des Abrundungsradius in diesem Bereich nicht mehr ablösen, ohne daß jedoch die Verbrennungsmulde zu tief wird.

Weiters hat sich gezeigt, daß die Tiefe der Abreißkante mit Vorteil in 0,45 bis 0,6 mal der Tiefe der Verbrennungsmulde liegt (Anspruch 3). Bei diesem Verhältnis ist die Relation zwischen dem umgelenkten und dem aufwärts strömenden Teil der Verbrennungsluft in den verschiedenen Kolbenstellungen am günstigsten und es herrscht eine zum Mitreissen eines an der Abreißkante eventuell vorhandenen Filmes ausreichende Geschwindigkeit.

In einer besonders günstigen Auslegung beträgt der größte Radius des äußeren Wandteiles in einer zum Kolbenboden parallelen Ebene 1,2 bis 1,35 mal dem Radius der vom Kolbenboden ausgehenden Einschnürung (Anspruch 4). Bei Überschreiten des höheren Verhältniswertes würde die Geschwindigkeit der Strömung um die Symmetrieachse zu stark abnehmen, weil diese bei konstantem Drall mit dem Radius absinkt, bzw würde an der Einschnürung die eintretende Frischluftströmung zu stark gedrosselt werden. Bei Unterschreiten des tieferen Verhältniswertes wäre bei strömungsgünstiger Formgebung der Verbrennungsmulde kein ausreichendes Volumen zu erreichen.

Weiters liegt der bevorzugte Wert für den kleinsten Radius des äußeren Wandteiles im Radialschnitt im Bereich von 0,14 bis 0,17 mal dem größten Radius des äußeren Wandteiles in einer zum Kolbenboden parallelen Ebene (Anspruch 5). In diesem Bereich ist das Verhältnis Volumen zu Oberfläche des Teiles der Verbrennungsmulde optimal, in dem die beiden überlagerten Rotationsströmungen auftreten. Ein stärkeres Abweichen des Querschnittes in einer Radialebene von der Kreisform würde die überlagerte Rotationsströmung zu stark behindern.

Die Tiefe der Verbrennungsmulde wird mit Vorteil so gewählt, daß der Radius der vom Kolbenboden ausgehenden Einschnürung 1,6 bis 2,5 mal der Tiefe der Verbrennungsmulde ist (Anspruch 6). Die Mulde soll aus thermischen und strömungstechnischen Gründen möglichst seicht sein. Ist sie zu tief, ist die Zu- und Abströmung des unteren Teiles der Verbrennungsmulde behindert.

In einer bevorzugten Weiterbildung schließlich ist die Entfernung des höchsten Punktes der mittigen Erhebung von der Ebene des Kolbenbodens 0,42 bis 0,5 mal der Tiefe der Verbrennungsmulde (Anspruch 7). Ist die Entfernung größer, ist das Totvolumen über der mittigen Erhebung zu groß, ist sie kleiner, behindert die mittige Erhebung wieder die Strömung und nimmt zu viel Wärme auf.

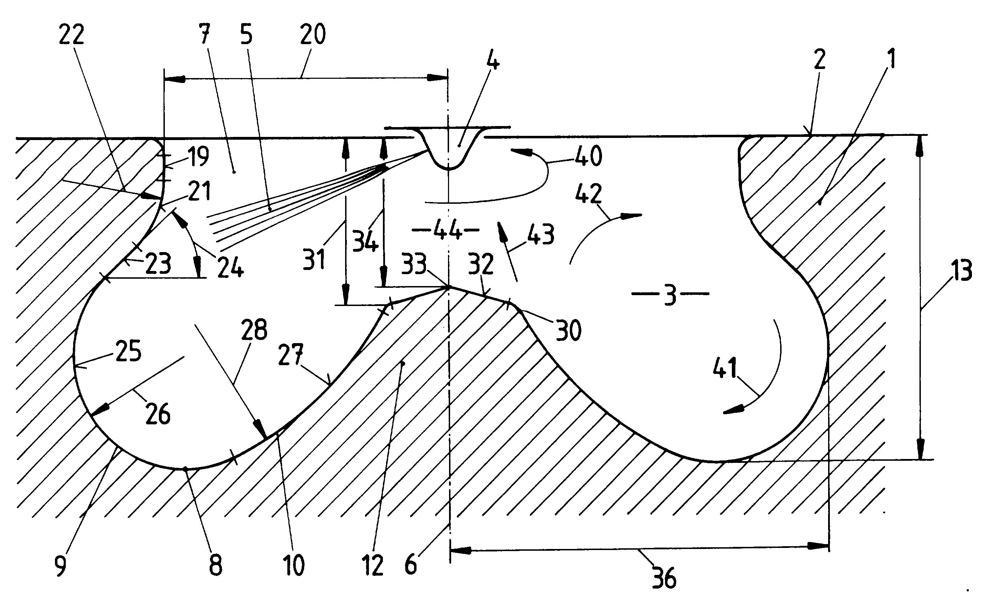

Im folgenden wird die Erfindung anhand einer einzigen Figur, die den Vertikalschnitt einer erfindungsgemäßen Kolbenmulde zeigt, beschrieben.

Von einem der Kolben einer Diesel-Brennkraftmaschine mit direkter Einspritzung ist nur der oberste Teil gezeigt, der von einem Kolbenboden 2 abwärts reicht und eine Verbrennungsmulde 3 enthält. Sie ist ungefähr in der Mitte des Kolbenbodens angeordnet. Wenn sich der Kolben in seinem oberen Totpunkt befindet, ist die Spitze 4 einer Einspritzdüse bezüglich der Verbrennungsmulde 3 in der abgebildeten Stellung. Handelt es sich um einen Motor mit zwei Gaswechselventilen, so ist die Einspritzdüse 4 meist leicht geneigt und ebenso wie die Verbrennungsmulde etwas außerhalb der Zylinderachse angeordnet. Handelt es sich um einen Motor mit vier Ventilen (nicht abgebildet) so steht die Einspritzdüse 4 genau senkrecht und ist meist in der Zylinderachse angeordnet. Einer der Einspritzstrahlen ist angedeutet und mit 5 bezeichnet.

Die Verbrennungsmulde 3 hat die Form eines Rotationskörpers, die Symmetrieachse ist mit 6 bezeichnet. Sie besteht aus einer vom Kolbenboden 2 ausgehenden Einschnürung 7, einem daran anschließenden äußeren Wandteil 9 der bis zum tiefsten Punkt 8, der sich vom Kolbenboden 2 aus gesehen in einer Tiefe 13 befindet, reicht und aus einem bei 8 beginnenden inneren Wandteil 10, der von einer mittigen Erhebung 12 gebildet wird.

An den ebenen und zur Symmetrieachse 6 normalen Kolbenboden 2 schließt eine Zylinderfläche 19 an, der Radius des Zylinders ist mit 20 bezeichnet. Die dabei entstehende Kante ist etwas abgerundet. Auf die Zylinderfläche 19 folgt ein weit ausgerundeteter Übergang 21, der Krümmungsradius der Ausrundung ist mit 22 bezeichnet. Darauf folgt eine Kegelfläche 23, deren Erzeugende mit der Waagrechten einen Winkel 24 von etwa 45 Grad einschließt. Darauf folgt eine erste Torusfläche 25, deren Krümmungsradius im Radialschnitt mit 26 bezeichnet ist und die bis zum tiefsten Punkt 8 reicht, an dem eine zweite Torusfläche 27 anschließt, deren Krümmungsradius im Radialschnitt mit 28 bezeichnet ist. Die zweite Torusfläche 27 endet mit einer Abreißkante 30, die, vom Kolbenboden 2 aus gemessen, in einer Tiefe 31 liegt. Darauf folgt dann noch eine sehr stumpfe Kegelfläche 32, deren höchster Punkt 33 vom Kolbenboden 2 aus gemessen in einer Tiefe 34 liegt. Mit 36 ist schließlich noch der größte Radius des äußeren Wandteiles 9 bezeichnet.

Die Proportionen sind folgendermaßen gewählt: Das Verhältnis des Radius 20 der Einschnürung 7 zum nicht dargestellten Radius des gesamten Kolbens beträgt etwa 1:2,2 bis 1:2,5. Der Radius 22 der Ausrundung am Übergang 21 verhält sich zum Radius 20 der Einschnürung 7 wie 0,3:1 bis 0,5:1. Der Winkel der Erzeugenden der Kegelfläche 23 und der Horizontalen beträgt etwa 45 Grad, er könnte bis auf 60 Grad vergrößert werden. Die Tiefe der Abreißkante 31 von der Ebene des Kolbenbodens 2 abwärts verhält sich zur Tiefe 13 des tiefsten Punktes 8 der Verbrennungsmulde 3 wie 0,45:1 bis 0,6:1. Der größte Radius 36 des äußeren Wandteiles 9 verhält sich zum Radius 20 der Einschnürung 7 wie 1,2:1 bis 1,35:1. Der kleinste Radius 26 des äußeren Wandteiles 9 verhält sich zum größten Radius 36 des äußeren Wandteiles 9 wie 0,14:1 bis 0,17:1.

Wenn man sich den Krümmungskreis mit dem Radius 26 im Radialschnitt als kompletten Kreis vorstellt, so kann man diesen einwärts-aufwärts bis hinauf zum Kolbenboden verschieben; dabei wird sein Abstand zum äußeren und inneren Wandteil 9,10 bis zum Passieren der Abreißkante 30 stetig zunehmen. Die Abreißkante 30 bildet somit im Radialschnitt keine Verengung der Wandkontur, keine weitere Einschnürung.

Die Tiefe 13 der Verbrennungsmulde verhält sich zum Radius 20 der Einschnürung 7 wie 1:1,6 bis 1:2,5. Die Entfernung 34 des höchsten Punktes 33 der mittigen Erhebung 12 von der Ebene des Kolbenbodens 2 verhält sich zur Tiefe 13 der Verbrennungsmulde wie 0,42:1 bis 0,5:1.

Die räumliche Strömung ist in der Abbildung nur angedeutet: Der Drall der einströmenden Frischluft um eine zur Symmetrieachse 6 parallele Achse ist durch einen Pfeil 40 angedeutet, die dieser überlagerte Drehung um eine in der Abbildung normal zur Bildebene liegende Achse durch einen Pfeil 41. So entsteht eine spiralförmige Strömung, der im wesentlichen entlang des äußeren Wandteiles Luft bzw Gas zugeführt und der an der Abreißkante 30 Luft bzw Gas abgeführt wird. Dort nämlich teilt sich die Strömung in eine Strömung 42, die der spiralförmigen Strömung angehört und in eine mit dem Pfeil 43 angedeutete Strömung, die die Wirbelspirale verläßt und, nach ausreichender Abwärtsbewegung des Kolbens, aufwärts strömt und dabei auch das Totwassergebiet 44 einbezieht.

Insgesamt wird bei diesen Proportionen eine über den Querschnitt gut verteilte Spiralströmung mit ausreichendem Gasdurchsatz erreicht, bei geringen thermischen Verlusten und Verwirbelungsverlusten. Dadurch sinkt der Verbrauch und werden die kritischen Emissionswerte verringert, beides über das bisher bekannte Maß hinaus.

## Patentansprüche

1. Dieselmotor mit Direkteinspritzung und mindestens einem Kolben (1) mit jeweils einer drehsymmetrischen Verbrennungsmulde (3), der die Verbrennungsluft mit Drall (40) zugeführt wird, wobei die Verbrennungsmulde (3) im Radialschnitt von einer vom Kolbenboden (2) ausgehenden Einschnürung (7), von einem daran anschließenden sich nach unten zu radial erweiternden und wieder verengenden äußeren Wandteil (9) und einem mittigen, eine Erhebung (12) bildenden, im wesentlichen konkaven inneren Wandteil (10) gebildet ist, **dadurch gekennzeichnet,** daß
a) der Übergang (21) von der Einschnürung (7) zum sich nach unten erweiternden äußeren Wandteil (9) eine starke Ausrundung (22) aufweist,
b) der innere Wandteil (10) bis zu einer Abreißkante (30) konkav ist, welche Abreißkante ungefähr in halber Tiefe der Tiefe (13) Verbrennungsmulde (3) liegt,
c) im Radialschnitt der kürzeste Abstand (33) zwischen äußerem (9) und innerem Wandteil (10) von der Abreißkante (30) bis zum tiefsten Punkt (8) der Verbrennungsmulde (3) stetig abnimmt.

2. Dieselmotor nach Anspruch 1, **dadurch gekennzeichnet,** daß die starke Ausrundung (22) am Übergang (21) von der Einschnürung (7) zum äußeren Wandteil (9) einen Rundungsradius (22) von 0,3 bis 0,5 mal dem Radius (20) der Einschnürung (7) aufweist.

3. Dieselmotor nach Anspruch 1, **dadurch gekennzeichnet,** daß die Tiefe (31) der Abreißkante (30) in 0,45 bis 0,6 mal der Tiefe (13) der Verbrennungsmulde (3) liegt.

4. Dieselmotor nach Anspruch 2, **dadurch gekennzeichnet,** daß der größte Radius (36) des äußeren Wandteiles (9) in einer zum Kolbenboden (2) parallelen Ebene 1,2 bis 1,35 mal dem Radius (20) der vom Kolbenboden (2) ausgehenden Einschnürung (7) beträgt.

5. Dieselmotor nach Anspruch 2, **dadurch gekennzeichnet,** daß der kleinste Radius (26) des äußeren Wandteiles (9) im Radialschnitt gleich 0,14 bis 0,17 mal dem größten Radius (36) des äußeren Wandteiles (9) in einer zum Kolbenboden (2) parallelen Ebene ist.

6. Dieselmotor nach Anspruch 1, **dadurch gekennzeichnet,** daß der Radius (20) der vom Kolbenboden (2) ausgehenden Einschnürung (7) 1,6 bis 2,5 mal der Tiefe (13) der Verbrennungsmulde (3) ist.

7. Dieselmotor nach Anspruch 6, **dadurch gekennzeichnet,** daß die Entfernung (34) des höchsten Punktes (33) der mittigen Erhebung (12) von der Ebene des Kolbenbodens (2) 0,42 bis 0,5 mal der Tiefe (13) der Verbrennungsmulde (3) ist.
